# EUROPEAN PATENT APPLICATION

(11) **EP 3 954 673 A1**
(43) Date of publication of application: **16.02.2022**
(21) Application number: 20191062.7
(22) Date of filing: 14.08.2020
(51) Int. Cl.: C07B 39/00, H01M 4/13915, H01M 4/1393, H01M 4/38, H01M 4/525, H01M 4/58, H01M 4/583, H01M 4/62, B01J 19/24, B01J 19/30

(54) **A METHOD FOR PREPARING SURFACE FLUORINATED BATTERY MATERIALS**

(71) Applicant: PAUL SCHERRER INSTITUT, 5232 Villigen PSI (CH)
(72) Inventor: STEFANCIC, Ales, 5430 Wettingen (CH); EL KAZZI, Mario, 8003 Zürich (CH)
(74) Representative: Fischer, Michael

(57) **Abstract**

The object of present innovation is to use mild fluorinating agents, such as hydrofluorocarbons - HCFs, perfluorocarbons - PFCs, hydrochlorofluorocarbons - HCFCs and chlorofluorocarbons - CFCs, to fine-tune the fluorination process in battery material preparation in order to obtain uniform nanometer sized surface fluoride coated battery materials. The use of vertical flow type reactor permits a fine-tuning of the fluorination process by accurately regulating the active gas or mixture of gases flow over battery materials using mass-flow regulators, and precisely setting the temperature with vertical tube furnace. Additionally, these fluorinating agents have slightly different reactivity, decomposing and reacting with battery materials at different temperatures, and therefore, offering additional parameter of fluorination fine-tuning. The suggested method is scalable and can be easily adapted as an industrial solution. Moreover, all these gases are non-toxic, non-corrosive and non-flammable gases at room temperatures, hence, they are more convenient to handle than highly-toxic and highly-corrosive HF and F₂.

## Description

The present invention relates to a method for preparing surface fluorinated battery materials, such as a cathode active material, an anode active material, a solid electrolyte material and a current collector material.

Li- and Na-ion non-aqueous batteries and recently aqueous batteries are continuously attracting tremendous attention of both scientific and industrial communities, while they are part of the solution to minimize the fossil fuel consumption by replacing internal-combustion engines and to store the energy from renewable energy sources (e.g. solar and wind power plants). In last decades, the discharge capacity and charging rate performance of Li and Na-ion batteries improved significantly. However, the existing battery materials used in the cathode, anode, current collector and electrolyte are degrading during extensive electrochemical cycling and are, therefore, subject of further improvements and optimization.

The cathode materials are able to uptake/ intercalate Li⁺ or Na⁺ ions upon battery discharge and release/ de-intercalate them upon charging. These materials can be in general classified into following groups: oxides, layered oxides, spinel oxides, phosphates, olivine phosphates, diphosphates, sulfates, fluoro-phosphates/ sulfates, hydroxi- phosphates/ sulfates and oxi-phosphates/ sulfates. Representatives of those groups are stated in the technical part below.

Most of the oxide-based cathode materials undergo surface degradation. It starts first, after the synthesis in direct contact with air. Some of the materials are moisture sensitive, forming a basic surface layer consisting of LiOH and Li₂CO₃, which contribute in lowering the cathode performance. Secondly, upon cycling in the battery, the surface suffer at high operating voltage from structural degradation caused by the oxygen instability and loss from the surface. The consequence results in surface structure with a large number of oxygen vacancies, which drives the migration of transition metals (TMs) toward the neighboring Li layers. The resulting effect is an inevitable reorganization of the crystal structure at the surface and later propagate to the bulk, with the widely accepted transition toward a disordered spinel and/or rock salt structure. This surface degradation causes also transition metals to dissolve into the electrolyte and thus poisoning the counter electrode. Those parasitic reactions taking place at the surface of the cathode materials affect directly the cycling performance leading to the specific capacity and voltage fading.

There was considered effort worldwide to protect the surface of the cathode materials in order to mitigating the surface degradation. Most of the research was focused on coating or modifying the surface of the cathode particles with electrochemically inactive thin layer such as:
(i) inorganic materials e.g. Al₂O₃, AlF₃, MgO, Nb₂O₅, TiO₂, ZnO and ZrO₂,
(ii) organic/inorganic layer formed during cycling using additives in the electrolyte, or
(iii) doping the surface with heavy ions e.g. Nb, Ti and Zr.

Another alternative approach, which is proven to increase the specific capacity and voltage retention, is anion substitution, in particular partial oxygen substitution with fluoride ions on the surface and in the bulk. Additionally, the conversion of basic surface layer into LiF has very positive effect, increases the specific capacity and voltage retention.

The surface of the anode materials (graphite, metallic lithium, Li₄Ti₅O₁₂, alloys materials, etc.) suffer during cycling at low potentials from the electrolyte reduction and lithium plating and dendrite formation. The electrolyte degradation leads to the formation of organic/inorganic layer covering the surface of the anode particles with direct impact on the battery performance. Tuning the surface property of the anode materials helps tremendously to improve the safety, cycling performance and mitigate the specific charge fading. For metallic lithium, which is today considered as the ideal anode, passivating its surface is a paramount matter that needs to be addressed in order to enable its integration again in the commercial batteries.

Likewise, the partially fluorinated and fluoride substituted anode materials exhibit better electrochemical performance than pristine counterparts do. For instance, partial fluorination of carbonaceous materials, such as graphite and non-graphitizing carbon, yields in increase of specific capacity, high Columbic efficiency and better electrochemical stability upon cycling. The positive effect of carbonaceous materials fluorination is well documented in both scientific publications and patents. Fluorination of Li₄Ti₅O₁₂ (LTO) anode material with XeF₂ and NH₄F leads to the reduction of side reactions between the liquid electrolyte and LTO, higher specific capacities and higher Columbic efficiencies in early cycles. Moreover, the LiF surface coated metallic lithium, obtained by fluorination with mild fluorinating agents, exhibit excellent electrochemical performance. The side reaction with liquid electrolyte and dendrite formation are largely suppressed.

The secondary batteries containing non-aqueous electrolytes (electrolytes based on organic carbonates and ethers) are widely used, however, the safety of these batteries continuous to be one of outstanding concerns. Upon short-circuiting, these batteries can release enough energy to damage the battery casing and set the organic soviets on fire. Therefore, the secondary all-sold-state batteries are gaining lots of attention recently. In contrast to liquid-based batteries, the all-sold-state batteries contain solid (non-flammable) electrolyte, which renders them much safer. In general, they can be classified into three major groups: Oxide-type ion conductors (e.g. perovskites, anti-perovskites, NASICONs and garnets), sulfide-type ion conductors (e.g. thio-LISCONs, LPS, LGPSs, argyrodites, LZPSs and layered sulfides) and solid-polymer-type ion conductors (e.g. polyether-based, polycarbonate-based, plastic-crystal-based). Even though that all-solid-state batteries are safer, and could lead to increase of energy density and higher voltage output per single cell via bipolar stacking, there are still fundamental issues which has to be addressed, such as low ionic conductivity, narrow thermodynamic stability window, and (electro-)chemical side reactions between solid electrolyte, cathode/anode materials and current collector. For example, it has been proven that the Li₃PS₄ (LPS) is oxidized above 2.3 V vs. Li⁺/Li and reduced below 1.7 V vs. Li⁺/Li, which is far outside the cell operation potential. Moreover, most of the sulfide-type solid electrolyte reacts chemically or electrochemically with layered transition metal oxide cathode materials, and therefore, hampering the electrochemical capabilities of the battery.

Hence, surface fluorination of solid electrolyte materials listed above is a promising method to improve the thermodynamic stability and mitigate side reactions, and consequently increase the battery performance.

The fluoride containing liquid electrolyte is known to reacts at high voltages with Al current collectors on the cathode, forming a thin layer of stable aluminum fluoride, which protects underlying metals from corrosion upon cycling at high voltage. However, the majority of existing solid electrolytes do not contain fluoride ions in their structure, hence the above stated passivation is not possible and the current collectors are prone to corrosion during cycling (e.g. on the Cu at the anode side and Al, Ti and stainless steel at the cathode side.

Therefore, surface fluorination would passivate the metal surface and mitigate the corrosion of current collectors in all-solid-state batteries and potentially in liquid based batteries as well.

Currently, there are two pathways to introduce fluoride in battery active materials. The first resides in bulk doping, which is achieved during the synthesis process by introducing a fluoride source, such as LiF, transition metal fluorides, NH₄F, NH₄HF₂, XeF₂ and fluoropolymers. The second is the surface fluorination. The majority of surface fluorination of cathode and anode material is achieved with strong and/or relatively strong gaseous fluorinating agents such as elementary fluorine, HF and NF₃ gases. In contrast to carbonaceous anode materials, the fluorination /LiF passivation of metallic lithium was achieved by controlled decomposition of fluoropolymers and R-134a chlorofluorocarbon in batch-type reactor.

Unfortunately, most of the known processes so far do not allow scalability and homogeneous surface fluorination of battery materials.

It is, therefore, the objective of the present invention to provide a method for preparing a surface fluorinated battery material, said method allowing to control the formation of the fluoride layer in more detail and to a more even extent over the complete bulk battery material.

This objective is achieved according to the present invention by a method for preparing a surface fluorinated battery material, such as a cathode active material, an anode active material, a solid electrolyte material and a current collector material, said method comprising the steps of:
a) inserting the battery material into a substantially vertically oriented tube-type reactor and placing the battery material on a porous support frit in absence of atmospheric conditions inside the tube-type reactor;
b) associating the tube-type reactor with a controllable heating in order to supply heat to the inner volume of the tube-type reactor;
c) heating the battery material to the desired extent in the range of 25 to 800°C under an inert gas atmosphere supplied by at least a first gas supply line; and
d) fluorinating the surface of the battery material at controllable temperature using a mild fluorinating agent or a mixture thereof, such as HCFs, PFCs, HCFCs and CFCs, e.g. CHF3, under a fluorinating gas or gas mixtures flow that is flooding the inner volume of the tube-type reactor at controllable flow rates.

This, therefore, provides a convenient method for the fluorination process in battery material preparation with the result of obtaining uniform nanometer sized surface fluoride coated battery materials. The use of the vertical flow type reactor permits a fine-tuning of the fluorination process by accurately regulating the active fluorinating gas or the mixture of fluorinating gas flows over the battery materials using mass-flow regulators, and precisely setting the temperature within the vertical tube furnace. Additionally, these fluorinating agents have slightly different reactivity, decomposing and reacting with battery materials at different temperatures, and therefore offering additional parameters of fluorination fine-tuning. The suggested method is scalable and can be easily adapted as an industrial solution. Moreover, all these mild fluorinating gases are non-toxic, non-corrosive and non-flammable gases at room temperatures, hence, they are more convenient to handle than highly-toxic and highly-corrosive HF and F₂.

Advantageously, the fluorinating gas or fluorinating gas mixture flow is oriented substantially vertically in the inner volume of the tube-type reactor. This features allows to control the flow rate through the battery material, which also contribute to the smooth distribution of the fluor content over the complete surface of the battery active material.

In view of the applied mild fluorination agents, preferred battery active materials (among others) are LiNi_{0.80}Co_{0.15}Al_{0.05}O₂ (NCA) and/or metallic lithium and/or Li₂S-P₂S₅.

Suitable time periods for the fluorinating of the battery material range from 1 minute and up to 15 hours.

In order to stabilize the freshly fluorinated surfaces on and in the battery material, the method may comprise additionally to cool down the tube-type reactor down under inert gas flow after the fluorinating gas flow treatment.

A suitable mean to provide the desired heat in a controllable manner to the battery material during the fluorinating gas flows may provide for a vertical tube furnace having the tube-type reactor inserted therein.

Preferred embodiments of the present invention are hereinafter described in more detail with reference to the attached drawings which depicts in:
- Figure 1: schematically the fluorination setup (a) and XPS surface analysis (b); and
- Figure 2: specific capacity vs. cycles graph exhibiting cycling performance of fluorinated and pristine NCA.

In the present invention, mild fluorinating agents, such as hydrofluorocarbons - HCFs, perfluorocarbons - PFCs, hydrochlorofluorocarbons - HCFCs and chlorofluorocarbons - CFCs, are used to enable the fine-tuning of the fluorination process in a controlled manner, resulting in a uniform nanometer sized surface fluoride coated battery active materials. Particularly, the use of those mild fluorinating agents is considered here as a novel approach compared to the previous reported gases (e.g. elementary fluorine, HF gas and NF₃) as the suggested gas-solid interfacial modification is achieved in a vertical flow type reactor, which allows an accurately regulating of the active gas or mixture of gases flow over battery materials using mass-flow regulators, and thereby precisely setting the temperature within the vertical tube furnace. Such a setup is both scalable and compatible with any industrials process. Moreover, subtle differences in reactivity (decomposition temperature) of these fluorinating agents offer an additional fine-tuning parameter of fluorination process. Furthermore, unlike the already reported strong gaseous fluorinating agents, the present gaseous mild fluorinating agents are non-toxic, non-corrosive and non-flammable gases at room temperatures, therefore, they are more convenient to handle than highly-toxic and highly-corrosive HF and F₂.

It is known that the HCFs, PFCs, HCFCs and CFCs are all potent greenhouse gases and CFCs and HCFCs are ozone-depleting gases, which are phasing-out of production and use based on Montreal Protocol agreement. However, there are still vast world stock of these materials, which could be used for fluorination of battery materials, and thus, in a controlled way braked down to "environmental-friendly" compounds. For example, the CHF₃, one of the preferred main fluorinating agent, is a large-volume (approximately 20 kilotons/year) side product in manufacturing polytetrafluoroethylene (PTFE), polyvinylidene fluoride (PVDF), foams, fire-extinguishing agents and refrigerants. Therefore, there is a worldwide effort to convert or reuse this environmentally detrimental molecule and fluorination of battery materials could be one of the possible solutions.

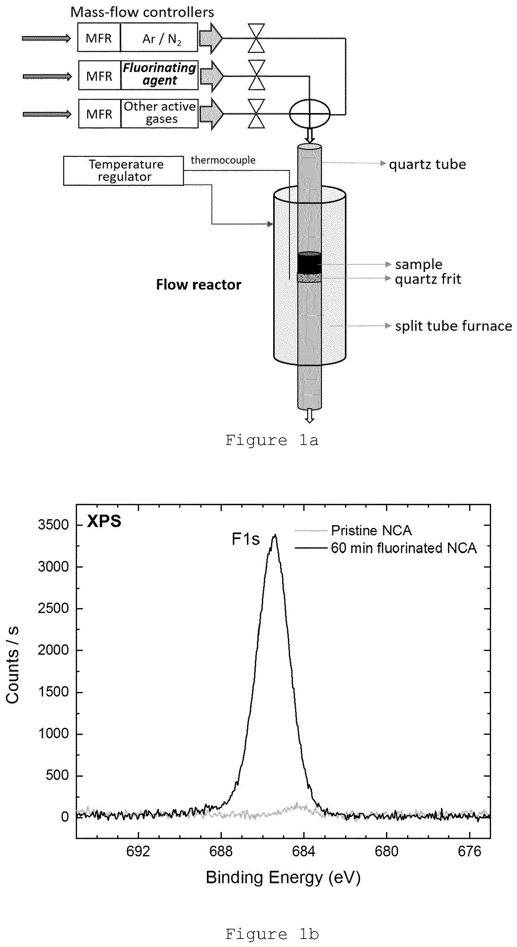

As an example, a LiNi_{0.80}Co_{0.15}Al_{0.05}O₂ (NCA) layered transition metal oxides battery cathode material was fluorinated with CHF₃ gas (mild fluorination agent) at 300°C in a vertical flow type reactor as shown on Figure 1a. The CHF₃ gas was mixed with Ar gas in ratio of 1:1 by using mass flow controllers. Sample was fluorinated for 60 min with CHF₃ gas respectively. Afterwards, the sample was transferred into the Ar-filled glove box under inert atmosphere and thoroughly ground. In Figure 1b), XPS surface analysis is shown being performed on pristine (light-grey) and after 60 min fluorination (dark-grey) NCA powder confirming the fluorination of the surface.

The X-ray photoemission spectroscopy data clearly indicate the monotonic increase of fluoride on the surface of cathode material after 60 min exposure to CHF₃ gas as shown in Figure 1b.

All prepared samples were mixed with PVDF and Super C carbon in a 80:10:10 ratio in NMP solution to prepare a homogeneous slurry. The slurry was cast on an Al foil having a thickness of 200 µm. Afterwards, the slurries were dried in a vacuum oven at 80 °C over the night, cut into 13 mm electrodes with loading of active material between 3.8 to 5.3 mg/cm², and dried at 120 °C over the night before storing the electrodes in Ar-filled glove box. The electrochemical cells were composed of cathode (described above), Celgard and glass-fibre separators, Li metal anode and electrolyte (1 M LiPF₆ ethylene carbonate: dimethyl carbonate, 1:1).

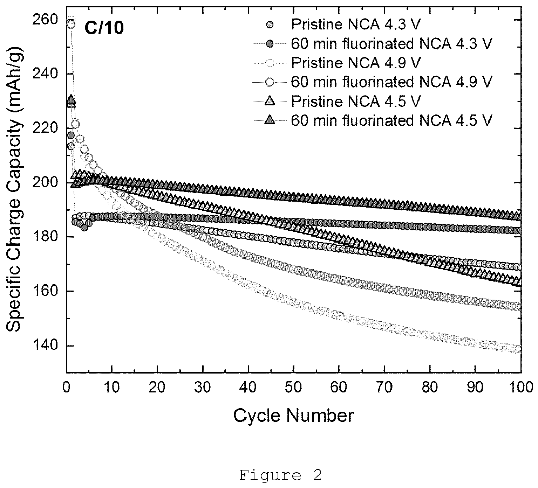

The electrochemical cells containing the fluorinated NCA material cycled at C/10 rate shows superior specific capacity retention at higher cut-off potential (4.5 V and 4.9 V) and better long-cycling performance in comparison to pristine NCA as shown on Figure 2.

Mild fluorinating agents, such as hydrofluorocarbons - HCFs, perfluorocarbons - PFCs, hydrochlorofluorocarbons - HCFCs and chlorofluorocarbons - CFCs, are convenient fluorinating agents, which enable a detailed fine-tuning of the fluorinating parameters, such as flow rate, concentration, temperature. In contrast to fluorine gas (usually used for cathode and anode materials fluorination), they are non-toxic, non-corrosive and non-flammable at room temperatures. Representative examples are CHF₃ (R-23), CF₄ (R-14), CCl₃F (R-11), CCl₂F₂ (R-12), CClF₃ (R-13), CHClF₂ (R-22), CClF₂CClF₂ (R-114), CClF₂CF₃ (R-115), CF₃CF₃ (R-116), CF₂CHClF (R-124), CHF₂CHF₂ (R-134) etc.

Suitable cathode materials are for example layered transition metal oxides, containing Mn, Fe, Co, Ni, Al, etc. with formulae Li₁₊ₓM1ₐM2_{b}M3_{c}O₂ and Na₁₊ₓM1ₐM2_{b}M3_{c}O₂ (x + a + b + c = 1). Typical representatives are LiNi_{0.33}Co_{0.33}Mn_{0.33}O₂ (NCM111), Nirich NCMs, such as LiNi_{0.85}Co_{0.1}Mn_{0.05}O₂, LiNi_{0.8}Co_{0.1}Mn_{0.1}O₂ (NCM811), LiNi_{0.6}Co_{0.2}Mn_{0.2}O₂ (NCM622), LiNi_{0.5}Co_{0.2}Mn_{0.3}O₂ (NCM523), Li-rich NCM; e.g. Li_{1.17}(Ni_{0.22}Co_{0.12}Mn_{0.6})_{0.8302}O₂, LiNi_{0.8}Co_{0.15}Al_{0.05}O₂ (NCA), Na_{0.67}Mn_{0.5}Fe_{0.35}Co_{0.15}O₂, Na_{0.67}Mn_{0.6}Fe_{0.25}Al_{0.15}O₂ etc.; oxides, e.g. MnO₂, V₂O₅, LiV₃O₈, etc.; Spinel oxides, such as LiMn₂O₄, LiMn_{1.5}Ni_{0.5}O₄, LiMn_{1.5}Cu_{0.5}O₄, LiCrMnO₄, LiFeMnO₄, etc.; Olivine phosphates, such as LiFePO₄, LiMnPO₄, LiNiPO₄, LiCoPO₄, etc.; Phosphates, such as Li₃Ti₂ (PO₄)₃, Li₅Fe₂(PO₄)₃, Li₃V₂(PO₄)₃, LiV₂(PO₄)₃, etc.; Sulfates, such as Li₂Fe₂(SO₄)₃, Li₂Fe(SO₄)₂, Li₂V₂(SO₄)₃, etc.; Hydroxi- phosphates/ -sulfates, such as LiFeSO₄(OH), LiCoPO₄(OH), LiCrPO₄(OH), LiFePO₄(OH), etc.; Oxiphosphates/ -sulfates, such as LiVPO₄O, Li₅VO(PO₄)₂, Li₂VO(HPO₄)₂, Li₂VOP₂O₇, etc.).

The anode materials can be in general classified as carbonaceous, titanium oxides, metal oxides, alloys, metal phosphides/ sulfides/ nitrides and metals. The representatives of carbonaceous are graphite, graphene, carbon nanotubes, fullerenes, carbon black, carbon fiber, petroleum coke, acetylene black, etc.

The second group are titanium oxides with Li₄Ti₅O₁₂ (LTO) and TiO₂ as representatives of this group. Third group are transition metal oxides, where the conversion mechanism is described with the following reaction: MₓO_{y} + 2y Li⁺ + 2y e⁻ --> y Li₂O + x M. The examples of the transition metal oxides are Fe₂O₃, Co₃O₄, MnO, CuO, NiO, SnO₂, etc. The Si, Ge, Sn, Sb, etc. metals are forming alloys with Li and Na metal. These materials represent alloying anodes and the alloying mechanism follows the x Li⁺ + x e⁻ + M --> LiₓM formula. The fifth group are metal phosphides/ sulfides/ nitrides with MₐX_{b} formula, where M = Co, Ni, Mn, Fe, Cu, Cr, Mo, etc. and X = P, S, N. The last group are alkali (e.g. Li, Na and K) alkaline earth (e.g. Mg and Ca) metals.

The oxide-type ion conductors, sulfide-type ion conductors and solid-polymer-type ion conductors are three mayor groups of solid electrolytes. The oxide-type ion conductors can be further divided to perovskites with ABO₃ formula, such as e.g. Li₃ₓLa_{(2/3)-x}TiO₃; anti-perovskites, such as e.g Li₃OCl, Li₃OCl_{0.5}Br_{0.5}, Li₃OCl_{0.5}I_{0.5}, Li₃₋₂ₓMgₓClO, etc.; NASICONs, such as Li_{1.3}Al_{0.3}Ti_{1.7}(PO₄)₃, Li₁₊ₓTi₂₋ₓScₓ (PO₄)₃⁺, etc.; and garnets with Li₅La₃M₂O₁₂ (M = Nb, Ta) formula, such as Li₅La₃Nb₂O₁₂, Li₆BaLa₂Ta₂O₁₂, Li₅₊₂ₓLa₃Nb₂₋ₓYₓO₁₂, Li₇La₃Zr₂O₁₂, etc. The second type of ionic conductors are sulfide-type, which consist of thio-LISCONs with Li₄ 4-xM1-yM'yS4 (M = Si, Ge, and M'= P, Al, Zn, Ga) formula (e.g. Li₁₀GeP₂S₁₂, etc.), LPS (Li₃PS₄), LGPSs (e.g. Li₁₀GeP₂S₁₂, Li₁₀SnP₂S₁₂, Li₁₁Si₂PS₁₂, Li_{9.54}Si_{1.74}P_{1.44}S_{11.7}Cl_{0.3}, Li_{10.35} (Sn_{0.27}Si_{1.08}) P_{1.65}S₁₂, etc.), argyrodites with Li₆PS₅X (X = Cl, Br, I) formula (e.g. Li₆PS₅Cl, Li₆PS₅Br and Li₆PS₅I), LZPS with Li₁₊₂ₓZn₁₋ₓPS₄ formula and layered sulfides, such as Li [Li_{0.33}Sn_{0.67}S₂], Li_{0.6} [Li_{0.2}Sn_{0.8}S₂], Li₂SnS₃, Li₂Sn₂S₅ etc.

The solid-polymer-type ion conductors are subdivided to polyether-based containing crystalline alkali metal salts of poly(ethylene oxide), polycarbonate-based such as polyethylene carbonate bis(trifluoromethanesulfonyl)imide composite, and plastic-crystal-based for example nitrile based (N≡C-CH2-CH2-C≡N) polar crystalline plastic.

The surface fluorination and inorganic fluoride coating is carried out in a vertical flow-type reactor consist of silica or metal tube containing silica or metal porous frit, which allows supports the battery material in question (cathode, anode, solid electrolyte or current collector), but allows unobstructed gas flow. Metal of glass caps equipped with isolation valves allow the transfer of fluorinated material under inert atmosphere into the glove box. Mass flow controllers ensure the accurate concentration of active gas, to produce the gas mixtures and to exchange active gas with inert one after the fluorination period. The vertical tube furnace is equipped with high-precision temperature control unit. Mild fluorinating agents (active gases) such as HCFs, PFCs, HCFCs and CFCs, either in pure form or as a mixture with inert, e.g. Ar, gas (between 0 and 80% of inert gas), are feed into the flow-type reactor by mass flow controllers with a flow rate between 3 to 50 ml/min. Battery materials suspended on silica or metal porous frit are fluorinated/ fluoride coates in a temperature range between 50 and 800°C. The fluorination process for cathode material (e.g. transition metal oxides) is carried out in a temperature range between 100 and 800°C, anode materials (e.g. mantellic lithium) between 50 and 200°C, solid-electrolyte (e.g. LPS) between 50 and 300°C, and current collector (e.g. Al and Cu metal) between 150 and 800°C.

### Electrochemical testing:

Conductive materials are for example Carbon black, acetylene black, Ketjen black, carbon fiber, graphite fine particles, natural graphite, artificial graphite, carbon nanotubes, fullerenes; metal powders, metal fibers, metal nanotubes, and conductive polymers (e.g. polyaniline, polyacetylene, polypyrrole, etc.), along with conductive material containing fluorine atoms (e.g. fluorocarbons).

Nonaqueous electrolyte comprise organic solvents and Li or Na salts. Organic solvents are for example organic carbonate based such as propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate and dibutyl carbonate and/or Ether based, such as tetrahydrofuran, 1,3-dioxane, dimethoxyethane, diethoxyethane, methoxyethoxyethane, methyldiglyme, dimethyl ether. Ester based electrolytes are for example methyl acetate and methyl butyrate. Nitriles such as acetonitrile benzonitrile. Other: N, N-dimethylformamide, dimethylacetamide, dimethylsulfoxide, sulfolane, dichloroethane, chlorobenzene, nitrobenzene, γ-butyrolactone, γ-valerolactone, propiolactone, etc., and mixtures of those. Ionic salts such as LiPF₆, LiBF₄, LiSbF₆, LiAsF₆, LiClO₄, LiCF₃SO₃, LiC₄F₉SO₃, LiAlO₂, LiAlCl₄, LiN (CₓF₂ₓ₊₁SO₂), etc. Along with their mixtures and Na analogues.

Binders used are vinylidene fluoride / hexafluoropropylene copolymer, polyvinylidene fluoride, polyacrylonitrile, polymethylmethacrylate, polytetrafluoroethylene, styrene butadiene rubber-based polymer, etc., and mixtures of them.

Separators can be for instance glass fibers, polyester, polyethylene, polypropylene, polytetrafluoroethylene (PTFE) or a combination of them.

Cathodes and anodes can be produced by thoroughly mixing cathode/ anode active material with conductive material(s) and binder in N-Methyl-2-pyrrolidone (NMP) solution/slurry. Then, casting the slurry on Al or Cu foil (current collector) for cathode and anode respectively and producing 100 - 350 µm thick film. Followed by vacuum drying at 80 °C, punching the electrodes and additional vacuum drying at 120 °C before storing cathodes inside Ar-filled glove box.

The electrochemical cells are produced by stacking cathode, separator soaked in nonaqueous electrolyte and anode inside the battery housing.

## Claims

1. Method for preparing a surface fluorinated battery material, such as a cathode active material, an anode active material, a solid electrolyte material and a current collector material, said method comprising the steps of:
a) inserting the battery material into a substantially vertically oriented tube-type reactor and placing the battery material on a porous support frit in absence of atmospheric conditions inside the tube-type reactor;
b) associating the tube-type reactor with a controllable heating in order to supply heat to the inner volume of the tube-type reactor;
c) heating the battery active material to the desired extent in the range of 25 to 800°C under an inert gas atmosphere supplied by at least a first gas supply line; and
d) fluorinating the surface of the battery material at controllable temperature using a mild fluorinating agent or a mixture thereof, such as HCFs, PFCs, HCFCs and CFCs, e.g. CHF3, under a fluorinating gas or fluorinating gas mixture flow that is flooding the inner volume of the tube-type reactor at controllable flow rates.

2. The method according to claim 1, wherein the fluorinating gas or fluorinating gas mixture flow is oriented substantially vertically in the inner volume of the tube-type reactor.

3. The method according to claim 1 or 2, wherein LiNi_{0.80}Co_{0.15}Al_{0.05}O₂ and/or metallic lithium and/or Li₂S-P₂S₅ is used as battery active material.

4. The method according to any of the preceding claims, wherein a fluorinating gas or fluorinating gas mixtures flow is established for a time duration between 1 minute and 15 hours.

5. The method according to any of the preceding claims, wherein after the fluorination the tube-type reactor is cooled down under inert gas flow.

6. The method according to any of the preceding claims, wherein the heating is achieved in a vertical tube furnace having the tube-type reactor inserted therein.
